# FASCICULE DE BREVET EUROPEEN

(11) **EP 2 522 551 B1**
(45) Date de publication et mention de la délivrance du brevet: **02.07.2014**
(21) Numéro de dépôt: 12167561.5
(22) Date de dépôt: 10.05.2012
(51) Int. Cl.: B60R 5/04, B60R 7/02

(54) **Ensemble de transport d'objets pour véhicule, et véhicule automobile équipé d'un tel ensemble**
Transporteinheit für Gegenstände für ein Fahrzeug, und mit einer solchen Einheit ausgestattetes Kraftfahrzeug
Object transport assembly for vehicle, and motor vehicle equipped with same

(30) Priorité: 13.05.2011 FR 1154168
(43) Date de publication de la demande: 14.11.2012
(73) Titulaire: Faurecia Automotive Industrie, 92000 Nanterre (FR)
(72) Inventeur: Vorburger, Estelle, 55600 MONTMEDY (FR); Lonniaux, Karine, 08200 SEDAN (FR)
(74) Mandataire: Domenego, Bertrand

(56) Documents cités:
- DE-A1- 10 117 562
- DE-A1-102009 039 475
- DE-U1- 20 212 396
- FR-A1- 2 890 615
- US-A- 4 484 682
- US-A1- 2002 145 022
- US-A1- 2005 088 009
- US-B1- 6 695 380

## Description

L'invention concerne en général un ensemble de transport d'objets pour un véhicule, notamment un véhicule automobile.

Plus précisément, l'invention concerne selon un premier aspect un ensemble de transport d'objets pour un véhicule, du type comportant :
- un article pouvant contenir au moins un objet, muni d'au moins un premier élément magnétique ou métallique,
- un plancher de véhicule, notamment un plancher de coffre de véhicule, sur lequel l'article est destiné à être placé.

US 4484682 décrit un ensemble de transport de ce type, l'article étant une boîte repas portable pourvue d'un aimant permanent. Ainsi, la boîte peut être posée sur une partie métallique du plancher d'un véhicule utilisé sur un chantier de construction.

L'ensemble présente le défaut que la boîte repas portable engendre des perturbations magnétiques, notamment lors du passage au contrôle dans les caisses de supermarchés.

Il est également connu du document FR-A-2 890 615 un plancher de véhicule automobile, du type comportant des moyens de fixation aptes à permettre l'immobilisation d'accessoires par rapport au véhicule, les moyens de fixation étant formés par des premiers éléments de fixation inscrits dans le volume du plancher et aptes à générer un champ magnétique.

Dans ce contexte, l'invention vise à proposer un ensemble de transport permettant de fixer l'article de manière robuste sur le plancher du véhicule, tout en limitant les perturbations magnétiques engendrées lorsque l'article est disposé hors du véhicule.

A cette fin, l'invention porte sur un ensemble de transport du type précité, caractérisé en ce que le plancher du véhicule comporte au moins un deuxième élément magnétique pour permettre la fixation magnétique libérable de l'article sur le plancher de véhicule.

Ainsi, il n'est pas nécessaire que l'article lui-même comporte un premier élément magnétique. Un premier élément métallique est suffisant pour bloquer l'article sur le plancher du véhicule. Quand l'article est posé sur le plancher du véhicule, le premier élément coopère avec le deuxième élément magnétique. Les deux éléments s'attirent l'un l'autre, une force d'attraction magnétique sollicitant les deux éléments l'un vers l'autre. Cette force est calibrée de manière à ce que l'article soit maintenu en position par rapport au plancher du véhicule, malgré les efforts subis par cet article. Ces efforts peuvent provenir de l'accélération du véhicule, du freinage de ce véhicule, des secousses dues à des irrégularités de la chaussée sur laquelle roule le véhicule, etc .... La force d'attraction magnétique est également calibrée de manière à permettre la libération de l'article vis-à-vis du plancher du véhicule, sous l'effet d'une traction exercée par un utilisateur sur l'article. La force d'attraction magnétique est calibrée par exemple pour qu'une personne âgée puisse séparer l'article du plancher sans avoir à effectuer des efforts démesurés.

>

Selon l'invention, l'article est un contenant pourvu d'un fond portant le premier élément. Le fond est la zone du contenant destinée à reposer sur le plancher. Le premier élément est fixé sur le fond à l'aide de tous les moyens adaptés. II est par exemple collé, cousu, vissé, etc .... Le premier élément est par exemple rapporté sur une face du fond tourné vers l'intérieur du contenant, c'est-à-dire sur la face du fond opposée au plancher. En variante, le premier élément est rapporté sur une face du fond tourné vers l'extérieur du contenant, c'est-à-dire vers le plancher. Selon une autre variante, le premier élément est situé dans l'épaisseur du fond.

Le premier élément s'étend par exemple sur toute la surface du fond. En variante, le premier élément ne couvre pas toute la surface du fond. Selon une autre variante, il est morcelé.

L'article peut comporter un unique premier élément. L'article en variante comporte plusieurs premiers éléments, répartis à la surface du fond. Dans ce cas, les premiers éléments sont distincts et ne sont pas directement liés les uns aux autres.

L'article comprend de plus une poignée en saillie vers l'extérieur dudit article, et solidaire du fond. La poignée est typiquement solidaire d'un point de l'article situé sur le bord du fond ou situé à proximité de ce bord. Ainsi, il est possible de soulever l'article en commençant par un bord du fond, de manière à détacher progressivement l'article du plancher. Ceci facilite le détachement de l'article.

La poignée peut être de tout type. Par exemple, la poignée est une boucle en un tissu offrant une bonne résistance mécanique, cousue au fond. La poignée est souple ou rigide.

Comme indiqué plus haut, l'article est équipé d'un premier élément de préférence métallique, de manière à ne pas déclencher d'alarme lors du passage dans les portiques de contrôle des caisses de supermarchés. En effet, les articles sont typiquement des sacs ou des contenants, prévus pour recevoir des produits de toutes sortes, achetés dans un supermarché.

L'article peut également être un contenant qui n'est pas destiné à recevoir des courses de supermarché, et qui n'est pas destiné à être emporté par l'utilisateur à l'intérieur du supermarché. Dans ce cas, l'article peut être une glacière, un bac rigide, une caisse, etc .... Du fait que l'article n'est pas destiné à passer dans des portiques de contrôle aux caisses de supermarchés, il est possible de prévoir que le premier élément n'est pas métallique mais magnétique.

L'article peut être de toute taille et de toute contenance, la force de la liaison magnétique entre le premier élément et le second élément étant ajustée en fonction du poids qu'il est possible de charger dans ledit article.

Le plancher est typiquement un plancher de coffre de véhicule automobile. En variante, le plancher est situé dans une autre zone du véhicule automobile, notamment dans l'habitacle. Le véhicule automobile peut être de tout type. Par exemple, ce véhicule est une berline ou monospace ou une camionnette ou encore un camion.

Pour les véhicules utilitaires, le plancher est typiquement le plancher de la zone de chargement du véhicule.

En variante, le plancher est un élément d'un train, d'un avion, ou de tout autre véhicule.

L'article est de préférence susceptible d'adopter une position déployée dans laquelle ledit article représente un volume interne capable de recevoir au moins un objet, et une position repliée de rangement. Dans sa position repliée, l'article présente un encombrement très inférieur à l'encombrement de la position déployée. II est ainsi possible de le ranger à l'intérieur du véhicule sans perte d'espace de rangement.

Le fond peut notamment être pliant et comporter au moins deux volets liés l'un à l'autre par une ligne de pliage. Dans une première variante de réalisation, le premier élément peut être lié au fond seulement par un bord, de telle sorte qu'il est possible de relever le premier élément en le faisant pivoter par rapport au fond quand on veut plier le fond.

Dans une seconde variante de réalisation, le premier élément est fractionné en plusieurs sous-éléments, chacun rigidement fixé à un des volets.

Par exemple, le plancher comporte un plateau et des sangles élastiques susceptibles de maintenir l'article en position repliée contre le plancher. L'article peut ainsi être glissé entre une sangle élastique et le plateau. Les sangles sont par exemple rigidement fixées au plateau à leurs extrémités opposées. Elles peuvent être fixées par tout moyen. Chaque sangle peut s'étendre sur toute la largeur du plateau, de telle sorte qu'il est possible de glisser plusieurs sacs entre la sangle et le plateau. Chaque sangle peut s'étendre sur seulement une partie de la largeur du plateau de telle sorte que par exemple un seul article peut être glissé entre la sangle et le plateau. Le plancher peut comporter plusieurs sangles, disposées parallèlement les unes aux autres ou au contraire inclinées les unes par rapport aux autres.

Les sangles, au repos, s'étendent de préférence dans des rainures en creux formées dans le plateau, de telle sorte qu'elles sont de niveau avec la surface libre du plateau.

Le plancher comporte typiquement plusieurs voire un grand nombre de seconds éléments magnétiques, répartis sur une grande face du plateau. Ainsi, il est possible de disposer des articles en différents points du plancher. Les seconds éléments magnétiques peuvent être disposés de manière à réaliser un dessin particulier ou un ensemble de motifs à la surface du plancher. II est ainsi possible de créer des décors attractifs dans le coffre du véhicule. Ainsi, le plancher peut présenter sur une face destinée à être visible un décor réalisé à l'aide de moquette et des seconds éléments métalliques ou magnétiques.

Les seconds éléments sont fixés sur une grande face du plateau par tous moyens adaptés. Par exemple, les bandes sont cousues ou collées sur la grande face du plateau.

Par exemple, le ou chaque second élément est une bande magnétique plane. Les bandes peuvent être parallèles les unes aux autres ou être inclinées les unes par rapport aux autres. Elles sont espacées régulièrement les unes des autres ou au contraire irrégulièrement. Elles sont typiquement indépendantes les unes des autres et ne sont pas directement liées les unes aux autres.

Les bandes présentent par exemple une largeur de 10 à 500mm et une épaisseur de 0,3 à 3mm.

En variante, le second élément est une feuille magnétique plane, couvrant une grande partie de la surface du plancher. Par exemple, cette feuille couvre au moins 50% de la surface du plancher, de préférence au moins 75% de la surface du plancher, et encore de préférence au moins 90% de la surface du plancher.

De préférence, le plancher est un plancher réversible. Plus précisément, le véhicule automobile comporte une structure fixe sur laquelle repose ledit plancher. La structure fixe étant un châssis ou une partie de la carrosserie du véhicule. Le plateau présente une première grande face portant les seconds éléments magnétiques. Le plateau comporte également une seconde grande face, opposée à la première, dépourvue d'éléments magnétiques. Quand un utilisateur souhaite utiliser la fonction de fixation magnétique libérable, le plancher est disposé avec la seconde grande face reposant sur la structure fixe, la première grande face étant tournée vers le haut, c'est-à-dire vers le pavillon du véhicule. La première grande face est ainsi accessible pour l'utilisateur, qui peut y déposer des articles.

Le plancher est mobile par rapport à la structure fixe, et l'utilisateur peut, quand il ne souhaite plus utiliser la fonction de fixation magnétique libérable, retourner le plancher de manière à ce que le plateau repose sur la structure fixe par la première grande face. La seconde grande face est tournée vers le haut.

Avantageusement, la première grande face constitue une face décorative du plateau, la seconde grande face constituant une face fonctionnelle. La première grande face porte alors un décor réalisé avec une moquette et les seconds éléments. La seconde grande face porte un revêtement moins décoratif, prévu par exemple pour le transport de produits salissants ou pouvant endommager les éléments magnétiques. La seconde grande face peut être par exemple recouverte d'une moquette d'une couleur non salissante, ou d'un revêtement résistant aux chocs et aux souillures, par exemple un revêtement plastifié.

En variante, la seconde grande face porte un revêtement décoratif et la première grande face, portant les seconds éléments, est fonctionnelle et présente un revêtement résistant.

De préférence, la structure fixe comporte au droit du plancher un ou plusieurs logements en creux, destinés à recevoir les articles dans leur position repliée. Ces logements en creux sont disposés de telle sorte que, quand le ou les articles sont maintenus contre le plancher par les sangles élastiques et que le plateau repose sur la structure fixée par sa première grande face, le ou les articles viennent se placer dans le logement creux.

Les sangles peuvent être montées sur la première ou la seconde grande face du plateau ou sur les deux faces du plateau. Si les sangles sont montées sur la première grande face du plateau, c'est quand le plancher sur la structure fixe par l'intermédiaire de la première grande face du plateau que les articles sont logés dans le logement creux. Inversement, si les sangles sont montées sur la seconde grande face, c'est quand cette grande face repose sur la structure fixe que les articles sont logés dans le logement en creux.

La structure fixe peut présenter un ou plusieurs logements en creux, communiquant ou séparés les uns des autres.

Selon un second aspect, l'invention concerne un véhicule, notamment un véhicule automobile équipé de l'ensemble de transport décrit ci-dessus.

D'autres caractéristiques et avantages de l'invention ressortiront de la description détaillée qui en est donnée ci-dessous, à titre indicatif et nullement limitatif, en référence aux figures annexées, parmi lesquelles :
- la Figure 1 est une vue schématique, de côté, d'un véhicule automobile équipé d'un ensemble de transport conforme à l'invention ;
- la Figure 2 est une vue en coupe, agrandie, de l'ensemble de transport de la Figure 1, l'article étant représenté en position déployée ;
- la Figure 3 est une vue similaire à celle de la Figure 2, l'article étant représenté en position repliée, des sangles élastiques de maintien de l'article contre le plancher et la structure fixe de support du plancher étant représentées ;
- les Figures 4 et 5 montrent l'article des Figures 1 à 3 respectivement partiellement replié et complètement replié ;
- la Figure 6 illustre une variante de réalisation du premier élément ;
- la Figure 7 illustre un plateau de plancher ayant une grande face décorative et une grande face fonctionnelle ; et
- les Figures 8 et 9 illustrent deux exemples de disposition du second élément sur le plancher.

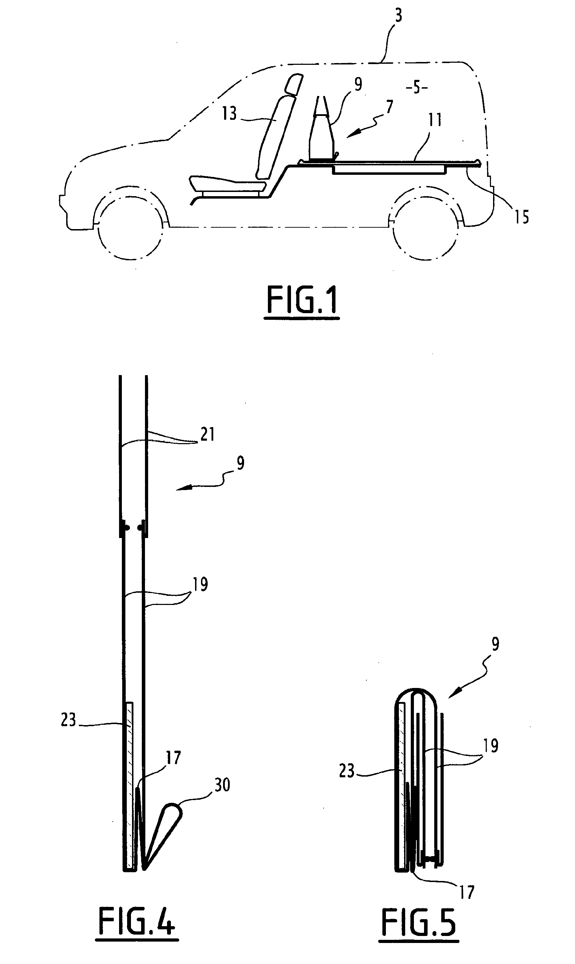

   La Figure 1 représente de manière schématique la partie arrière d'un véhicule automobile. Ce véhicule comporte :
- une carrosserie 3 ;
- un coffre 5 ;
- un ensemble 7 de transport d'objets, pourvu d'un article 9 pouvant contenir au moins un objet et d'un plancher de coffre 11 délimitant le coffre vers le bas ; et
- un siège 13 délimitant le coffre vers l'avant.

La carrosserie 3 comporte notamment un châssis 15 sur lequel repose le plancher 11.

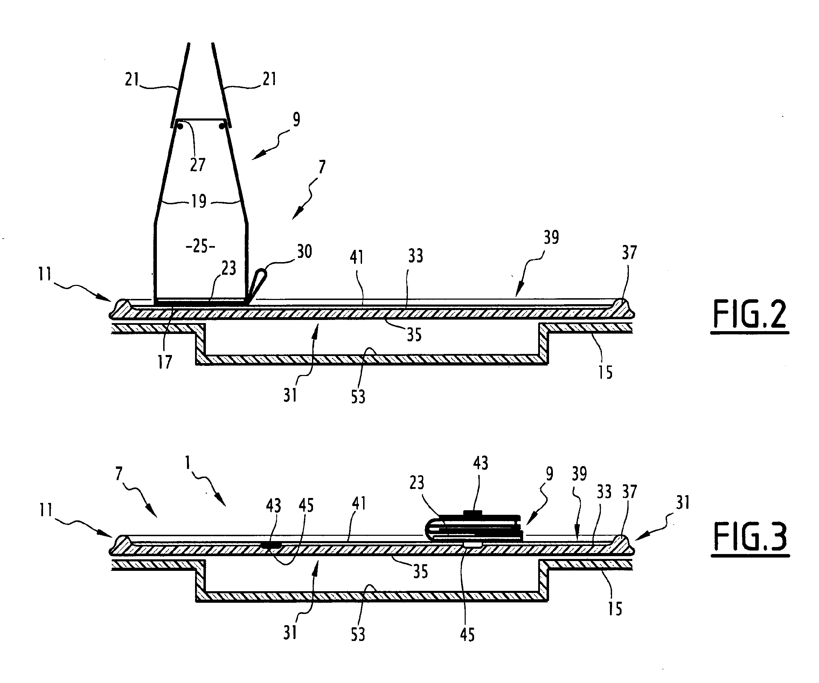

L'article 9 est typiquement un sac, représenté à plus grande échelle sur les Figures 2, 4 et 5. Le sac 9 comporte un fond 17, des parois latérales 19 liées au fond 17, et des poignées 21. Les poignées 21 sont liées à des bords des parois latérales 19 opposés au fond 17.

Par ailleurs, l'article 9 comporte un élément magnétique 23, cousu au fond 17, l'élément 23 étant lié à une face du fond 17 tournée vers l'intérieur du sac.

L'élément magnétique 23 est une plaque en un matériau magnétique, ayant sensiblement les mêmes dimensions que le fond 17.

Dans une autre conception l'élément magnétique 23 est en deux ou plusieurs parties fixées séparément sur le fond 17.

Comme visible sur les Figures 2 à 5, l'article 9 est susceptible d'adopter une position déployée dans laquelle il présente un volume interne 25 capable de recevoir un grand nombre d'objets (Figure 2), et une position repliée de rangement, représentée sur la Figure 3.

Dans la position déployée, représentée sur la Figure 2, le fond est sensiblement plat. Les parois 19 sont dans des positions dressées par rapport au fond, et sont sensiblement perpendiculaires au fond. Les parois latérales 19 et le fond 17 délimitent ensemble le volume interne 25, ce volume interne présentant une ouverture 27 vers le haut, c'est-à-dire à l'opposé du fond 17. L'ouverture 27 est délimitée par les bords des parois latérales 19. Les poignées 21 sont susceptibles soit de se rabattre dans l'ouverture 27 de manière à fermer celle-ci, soit, comme représenté sur la Figure 2, de se placer dans une position dressée dans laquelle les volets 21 dégagent l'ouverture 27. Dans leurs positions dressées, les poignées 21 sont par exemple dans le prolongement des parois latérales 19.

Dans l'exemple de réalisation représentée sur les Figures 2 à 5, le premier élément 23 présente une forme rectangulaire. II est cousu sur le fond 17 par un bord et seulement par un bord. Ainsi, pour faire passer l'article à sa position repliée, il est possible de relever l'élément magnétique 23 contre une paroi latérale 19, en le faisant pivoter autour de la couture. Par ailleurs, le fond 17 et deux des côtés latéraux 19 sont conformés de manière à pouvoir être repliés comme un soufflet, de telle sorte que les autres parois 19 sont rapprochées l'une de l'autre tout en restant parallèles l'une à l'autre, comme illustré sur la Figure 4. Les poignées 21 sont ensuite susceptibles d'être rabattues à l'extérieur du sac, contre l'une des parois 19, les parois 19 étant ensuite elles-mêmes pliées en deux autour d'une ligne de pliage sensiblement parallèles au fond. On arrive alors à la configuration de la Figure 5.

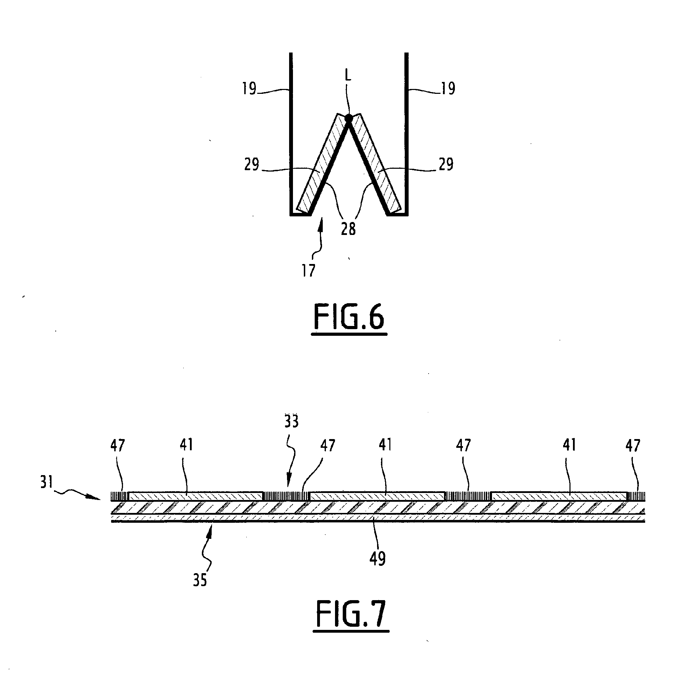

Dans une autre variante de réalisation représentée par la figure 6, le fond 17 comprend deux volets 28 susceptibles d'être pliés l'un par rapport à l'autre autour d'une ligne de pliage L. Le premier élément 23 est fractionné en deux sous-éléments 29 de forme identique aux deux volets 28 du fond 17. Ils sont fixés, cousus ou collés, en totalité sur les volets 28 et permettent ainsi au fond 17 et aux côtés 19 de pouvoir être repliés comme un soufflet.

L'article 9 comporte encore une poignée 30 solidaire du fond 17. La poignée 30 est par exemple une tirette en un matériau textile, cousue à la jonction entre l'une des parois 19 et le fond 17.

Le plancher 11 comporte un plateau 31 présentant des première et seconde grandes faces opposées l'une à l'autre 33 et 35. La première grande face 33 porte par exemple un bourrelet périphérique 37, délimitant une zone centrale en creux 39 permettant d'intégrer dans l'épaisseur du plancher les éléments magnétiques plats 41. La seconde grande face 35 est sensiblement plane. Le plancher 11 comporte encore une pluralité de seconds éléments magnétiques 41 pour permettre la fixation magnétique libérable de l'article 9 sur le plancher. Les seconds éléments magnétiques sont par exemple des bandes planes, fixées sur la première grande face 33. Les bandes 33 sont constituées d'un matériau magnétique d'une polarité opposée à celle de l'élément magnétique 23. Elles sont fixées au fond de la zone en creux 39. Elles sont réparties sur la première grande face 33.

Les bandes 33 présentent une faible épaisseur, par exemple une épaisseur comprise entre 0,3 et 3 mm.

Comme le montre la Figure 3, le plancher comporte encore une pluralité de sangles élastiques 43, destinées à maintenir l'article en position repliée contre le plancher.

Les sangles élastiques sont constituées par exemple d'un caoutchouc naturel ou synthétique. Elles sont rigidement fixées au plateau à leurs deux extrémités opposées. Comme le montre la Figure 3, il est ainsi possible de glisser le sac 9 en position repliée entre le plateau 31 et l'une des sangles 43. Les sangles sont par exemple montées sur la première grande face 33 du plateau.

La première grande face 33 comporte dans ce cas des rainures en creux 45 destinées à recevoir les sangles 43 quand celles-ci ne sont pas utilisées pour le maintien des sacs. Au repos, les sangles 43 sont rangées dans les rainures 45, de telle sorte que la grande face 33 est sensiblement de niveau. Les sangles 43 ne font pas saillies par rapport à la grande face 33 quand elles sont rangées dans les rainures 45.

Les sangles 43 sont des sangles plates.

Le plancher 11 est de type réversible. Pour permettre l'utilisation de la fonction de fixation magnétique, le plancher 11 est agencé de telle sorte que la seconde grande face 35 repose sur le châssis 15. Toutefois, quand l'utilisateur ne souhaite pas utiliser la fonction de fixation magnétique, le plancher peut être disposé de telle sorte que la première grande face 33 repose sur le châssis 15.

Comme visible sur la figure 7, la première face 33 est une face décorative, le décor étant formé de moquette 47 et du/des seconds éléments 41. La seconde grande face 35 est une face fonctionnelle, comportant un revêtement 49 plus résistant que celui de la première grande face 33.

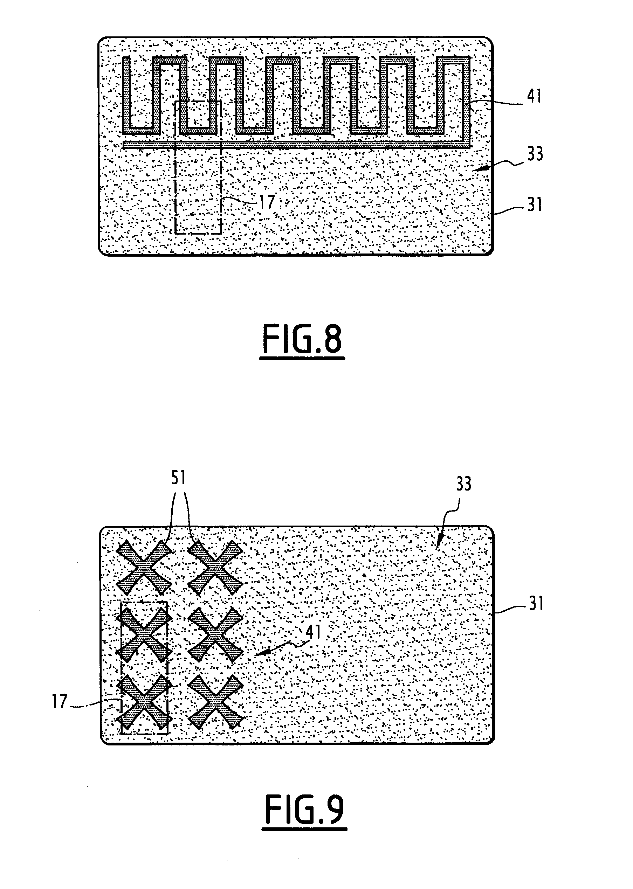

Comme visible sur la figure 8, le second élément 41 peut avoir par exemple un dessins en bandes parallèles raccordées les unes aux autres. Le second élément 41 est disposé sur la moitié transversale de la première grande face 33 située la plus vers l'avant du véhicule.

Dans ce cas, la force d'attraction entre les premier et second éléments est ajustée pour qu'il soit suffisant de disposer une moitié du fond du sac sur le second élément 41 pour maintenir le sac en position.

Dans la variante de réalisation de la figure 9, les seconds éléments 41 dessinent plusieurs motifs 51 décoratifs, séparés les uns des autres. Ces motifs sont répartis sensiblement sur toute une moitié gauche de la première grande face 33. Dans ce cas, la force d'attraction entre les premier et second éléments est ajustée pour que la force de maintien du sac en position soit suffisante quand la totalité du fond du sac est disposée sur le côté gauche de la première grande face, sensiblement à n'importe quelle position.

II est à noter que le châssis 15 comporte un logement en creux 53 prévu pour recevoir l'article dans sa position repliée. Ainsi, quand l'article 9, dans sa position repliée est maintenu contre la première grande face 33 par une sangle 43, et que le plancher est agencé avec sa première grande face 33 contre le châssis 15, c'est-à-dire tournée vers le bas, l'article 9 vient se loger dans le logement en creux 53. Le plancher reste ainsi de niveau, à l'horizontale.

Le fonctionnement de l'ensemble de transport va maintenant être expliqué.

Quand l'utilisateur veut utiliser la fonction de fixation magnétique, il place le plancher 11 comme représenté sur les Figures 2 et 3, à savoir avec la première grande face 33 tournée vers le haut. Les éléments magnétiques 41 sont alors accessibles.

L'utilisateur déploie ensuite le ou les articles qu'il souhaite utiliser. II place des objets à l'intérieur du volume interne de l'article, et pose cet article sur le plancher. Le fond 17 de l'article repose alors sur la grande face 33, l'utilisateur plaçant l'article 9 de telle sorte que le fond recouvre au moins un des éléments magnétiques 41.

L'élément magnétique 23 et l'élément magnétique 41 sont de polarités opposées, de telle sorte qu'une force d'attraction mutuelle s'exerce entre les deux éléments magnétiques. L'article 9 est ainsi bloqué en position à l'intérieur du coffre.

De préférence, les parois du sac sont rigides de telle sorte que les produits disposés dans le volume interne du sac ne risquent pas de s'échapper et de tomber sur le plancher par déformation du sac. Le sac est autoportant.

Quand l'utilisateur veut sortir le sac du coffre, il saisit la poignée 30 et tire celle-ci vers le haut. Un bord du fond 17 se décolle du plancher. L'utilisateur continue alors à lever la poignée, jusqu'à ce que tout le fond 17 soit décollé du plancher. Quand l'utilisateur a vidé le sac, il lui est possible de replier celui-ci et de le glisser entre l'une des sangles élastiques 43 et le plateau 31. Le sac est ainsi rangé jusqu'à ce que l'utilisateur souhaite l'utiliser une nouvelle fois.

Il est à noter qu'il est possible de ranger le sac ailleurs dans le véhicule, par exemple dans des poches ménagées dans le dos des sièges du véhicule.

Si l'utilisateur ne souhaite plus utiliser la fonction de fixation magnétique, il peut retourner le plancher 11, de telle sorte que la grande face 33 soit tournée vers le châssis 15. Les sacs 9, pris entre les sangles 43 et le plateau 31 viennent ainsi se ranger dans le logement 53 ménagé dans le châssis.

## Revendications

1. Ensemble (7) de transport d'objets pour un véhicule, notamment un véhicule automobile, comportant :
- un article (9) pouvant contenir au moins un objet, muni d'au moins un premier élément (23) magnétique ou métallique,
- un plancher (11) de véhicule, notamment un plancher de coffre (5) de véhicule, sur lequel l'article (9) est destiné à être placé,
**caractérisé en ce que** le plancher (11) de véhicule comporte au moins un deuxième élément (41) magnétique pour permettre la fixation magnétique libérable de l'article (9) sur le plancher (11) de véhicule et que l'article (9) est un contenant, pourvu d'un fond (17) portant ledit premier élément (23) et que l'article (9) comprend une poignée (30) en saillie vers l'extérieur dudit article (9) et solidaire du fond (17).

2. Véhicule automobile comportant un ensemble selon la revendication 1, **caractérisé en ce que** le véhicule comporte une structure fixe (15), le plancher (11) ayant un plateau (31) dont une première grande face (33) porte le ou chaque second élément magnétique (41) et une seconde grande face (35) opposée à la première, le plancher (11) étant mobile par rapport à la structure fixe (15) et étant susceptible d'être agencé soit avec la première grande face (31) tournée vers le haut soit avec la seconde grande face (33) tournée vers le haut.

3. Véhicule automobile selon la revendication 2, **caractérisé en ce que** le plancher (11) repose sur la structure fixe (15), la structure fixe (15) comportant au moins un logement (47) en creux de réception de l'article (9) dans sa position repliée.

4. Véhicule automobile selon l'une des revendications 2 ou 3, **caractérisé en ce que** l'article (9) est susceptible d'adopter une position déployée dans laquelle ledit article (9) présente un volume interne (25) capable de recevoir au moins un objet, et une position repliée de rangement.

5. Véhicule automobile selon la revendication 4, **caractérisé en ce que** le plancher (11) comporte au moins une sangle élastique (43) susceptible de maintenir l'article (9) en position repliée contre le plancher (11).

6. Véhicule automobile selon l'une quelconque des revendications 2 à 5, **caractérisé en ce que** le plancher (11) comporte un plateau (31) et plusieurs seconds éléments magnétiques (41) répartis sur une grande face (33) du plateau (31).

7. Véhicule automobile selon l'une quelconque des revendications 2 à 6, **caractérisé en ce que** le ou chaque second élément (41) est une bande magnétique plane.

8. Véhicule automobile selon l'une quelconque des revendications 2 à 7, **caractérisé en ce que** le plancher (11) comprend un plateau (31), le ou chaque second élément (41) étant fixé sur une grande face (33) du plateau (31) tournée vers le haut.

## Patentansprüche

1. Einrichtung (7) zum Transport von Objekten für ein Fahrzeug, insbesondere ein Kraftfahrzeug, aufweisend:
- einen Artikel (9), der wenigstens ein Objekt enthalten kann, ausgestattet mit wenigstens einem ersten, magnetischen oder metallischen Element (23),
- einen Fahrzeugboden (11), insbesondere einen Fahrzeug-Kofferraumboden (5), auf welchem der Artikel (9) zu platzieren vorgesehen ist,
**dadurch gekennzeichnet, dass** der Fahrzeugboden (11) wenigstens ein zweites, magnetisches Element (14) aufweist zum Ermöglichen der lösbaren magnetischen Fixierung des Artikels (9) auf dem Fahrzeugboden (11) und dass der Artikel (9) ein Behälter ist, ausgestattet mit einem Bodenteil (17), der das erste Element (23) trägt, und dass der Artikel (9) einen Griff (30) aufweist, der zu dem Äußeren des Artikel (9) vorsteht und mit dem Bodenteil (7) fest verbunden ist.

2. Kraftfahrzeug mit einer Einrichtung gemäß Anspruch 1, **dadurch gekennzeichnet, dass** das Fahrzeug eine fixe Struktur (15) aufweist, wobei der Boden (11) eine Platte (31) hat, von der eine erste Plattenseite (33) das oder jedes zweite, magnetische Element (41) trägt und eine zweite Plattenseite (35) entgegengesetzt zu der ersten ist, wobei der Boden (11) bezüglich der fixen Struktur (15) bewegbar ist und eingerichtet ist, um entweder mit der ersten Plattenseite (31) nach oben gewandt oder mit der zweiten Plattenseite (33) nach oben gewandt angeordnet zu sein.

3. Kraftfahrzeug gemäß Anspruch 2, **dadurch gekennzeichnet, dass** der Boden (11) auf der fixen Struktur (15) aufliegt, wobei die fixe Struktur (15) wenigstens einen vertieften Aufnahmeraum (47) zur Aufnahme des Artikels (9) in dessen Faltposition aufweist.

4. Kraftfahrzeug gemäß einem der Ansprüche 2 oder 3, **dadurch gekennzeichnet, dass** der Artikel (9) eingerichtet ist, um eine Entfaltungsposition, in welcher der Artikel (9) ein inneres Volumen (25) hat, das in der Lage ist wenigstens ein Objekt aufzunehmen, und eine Faltposition zum Abstellen einzunehmen.

5. Kraftfahrzeug gemäß Anspruch 4, **dadurch gekennzeichnet, dass** der Boden (11) wenigstens einen elastischen Gurt (43) aufweist, der eingerichtet ist, um den Artikel (9) in der Faltposition gegen den Boden (11) zu halten.

6. Kraftfahrzeug gemäß einem der Ansprüche 2 bis 5, **dadurch gekennzeichnet, dass** der Boden (11) eine Platte (31) und mehrere zweite, magnetische Elemente (41) aufweist, die über eine Plattenseite (33) der Platte (31) verteilt sind.

7. Kraftfahrzeug gemäß einem der Ansprüche 2 bis 6, **dadurch gekennzeichnet, dass** das oder jedes zweite Element (41) ein flaches, magnetisches Band ist.

8. Kraftfahrzeug gemäß einem der Ansprüche 2 bis 7, **dadurch gekennzeichnet, dass** der Boden (11) eine Platte (31) aufweist, wobei das oder jedes zweite Element (41) an einer Plattenseite (33) der Platte (31) befestigt ist, die nach oben gewandt ist.

## Claims

1. Object-transporting assembly (7) for a vehicle, especially a motor vehicle, comprising:
- an article (9) which is capable of containing at least one object and is equipped with at least one first magnetic or metallic element (23);
- a vehicle floor (11), especially a vehicle boot floor (5), on which the article (9) is intended to be placed,
**characterised in that** the vehicle floor (11) comprises at least one second magnetic element (41) for allowing the releasable magnetic fixing of the article (9) onto the vehicle floor (11), and that said article (9) is a container which is provided with a bottom (17) carrying the said first element (23), and that said article (9) comprises a handle (30) which projects towards the outside of the said article (9) and is integral with said bottom (17).

2. Motor vehicle comprising an assembly according to Claim 1, **characterised in that** said vehicle comprises a fixed structure (15), the floor (11) having a tray (31), a first large face (33) of which carries the second magnetic element (41), or each second magnetic element (41), and a second large face (35) which is opposed to the first, the floor (11) being movable in relation to the fixed structure (15) and being capable of being arranged either with the first large face (31) directed upwards or with the second large face (33) directed upwards.

3. Motor vehicle according to Claim 2, **characterised in that** the floor (11) rests on the fixed structure (15), said fixed structure (15) comprising at least one recessed housing (47) for receiving the article (9) in its folded-up position.

4. Motor vehicle according to either of Claims 2 or 3, **characterised in that** the article (9) is capable of adopting an unfolded position, in which the said article (9) has an internal volume (25) which is capable of receiving at least one object, and a folded-up storage position.

5. Motor vehicle according to Claim 4, **characterised in that** the floor (11) comprises at least one elastic strap (43) which is capable of keeping the article (9) in the folded-up position against the floor (11).

6. Motor vehicle according to any of Claims 2 to 5, **characterised in that** the floor (11) comprises a tray (31) and a number of second magnetic elements (41) which are distributed over a large face (33) of said tray (31).

7. Motor vehicle according to any of Claims 2 to 6, **characterised in that** the second element (41), or each second element (41), is a flat magnetic strip.

8. Motor vehicle according to any of Claims 2 to 7, **characterised in that** the floor (11) comprises a tray (31), the second element (41), or each second element (41), being fixed onto a large face (33) of said tray (31), which face is directed upwards.
